# EUROPEAN PATENT APPLICATION

(11) **EP 4 815 530 A1**
(43) Date of publication of application: **30.09.2026**
(21) Application number: 24910941.4
(22) Date of filing: 19.12.2024
(51) Int. Cl.: H04W 8/24

(54) **COMMUNICATION METHOD AND APPARATUS**

(30) Priority: 27.12.2023 CN 202311825952
(71) Applicant: Huawei Technologies Co., Ltd., Shenzhen, Guangdong 518129 (CN)
(72) Inventor: LU, Jianzhong, Shenzhen, Guangdong 518129 (CN); XIE, Xinqian, Shenzhen, Guangdong 518129 (CN); SHAO, Jiafeng, Shenzhen, Guangdong 518129 (CN)
(74) Representative: Pfenning, Meinig & Partner mbB
(86) International application number: PCT/CN2024/140758
(87) International publication number: WO 2025/140012

(57) **Abstract**

A communication method and apparatus are provided, which are applied to the field of communication technologies. The method includes: sending first information, where the first information indicates M carriers, signals sent on the M carriers meet a time-domain error condition and/or a frequency-domain error condition, and M is an integer greater than or equal to 2; and sending the signals, where the signals are used for sensing. According to embodiments of this application, sensing performance can be improved.

## Description

### CROSS-REFERENCE TO RELATED APPLICATIONS

This application claims priority to Chinese Patent Application No. 202311825952.2, filed with the China National Intellectual Property Administration on December 27, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

In a process of evolution from a 5th generation (5th-generation, 5G) mobile communication system to a 5G-advanced (5G-advanced, 5G-A) technology, an integrated sensing and communication technology is considered as one of key technologies that can extend a service capability of a mobile communication network. A core idea of the integrated sensing and communication technology is to add a sensing capability to the mobile communication network, and construct capabilities of detection, tracking, imaging, and the like of a target, so that communication and sensing capabilities are integrated into one network, thereby achieving harmonious coexistence and mutual benefit. A principle of a sensing technology is as follows: A transmit end device sends a radio wave (that is, a sensing signal or a signal used for sensing) in a specific direction. After the radio wave is irradiated to a surface of a target, a reflected wave (that is, an echo signal of the sensing signal) may be formed. In this case, a receive end device receives and processes the reflected wave to obtain sensing data, such as information about a position, a speed, or a type of the target.

Currently, in a scenario such as a dual connectivity (Dual Connectivity, DC) scenario or a carrier aggregation (Carrier Aggregation, CA) scenario, a terminal device may send sensing signals on a plurality of carriers, but sensing performance of the sensing signals sent on the plurality of carriers needs to be improved.

### SUMMARY

Embodiments of this application provide a communication method and apparatus, to help improve sensing performance.

When a terminal device sends sensing signals on a plurality of carriers, a receive end of the sensing signals may separately process the sensing signal on each carrier, or may jointly process the sensing signals on the plurality of carriers. A joint processing manner can obtain higher sensing performance, but also imposes a requirement on a capability of the terminal device to send signals on a plurality of carriers. If the receive end performs joint processing on sensing signals that do not meet the requirement, accuracy of a sensing result may be affected. This application provides a communication method and apparatus. A terminal device reports a carrier, of the terminal device, that meets a time-domain error condition and/or a frequency-domain error condition, or a terminal device reports time-domain error information and frequency-domain error information of signals sent by the terminal device on a plurality of carriers, so that a network device can select a proper signal processing algorithm (for example, performing joint processing on sensing signals sent on the plurality of carriers) based on a report from the terminal device, thereby improving sensing performance.

According to a first aspect, this application provides a communication method. The method may be performed by a first communication apparatus. For example, the first communication apparatus may be a terminal device, a component (for example, a chip or a chip system) in a terminal device, or a component that implements a part of functions of a terminal device. For example, an execution body is the terminal device. The method may include: The terminal device sends first information; and the terminal device sends a signal, where the signal is used for sensing. The first information has the following implementations.

Manner 1: The first information indicates M carriers. Signals sent on the M carriers meet a time-domain error condition and/or a frequency-domain error condition, or equivalently, the M carriers meet the time-domain error condition and/or the frequency-domain error condition. M is an integer greater than or equal to 2.

Manner 2: The first information indicates a time-domain error value and/or a frequency-domain error value. Signals sent on M carriers meet the time-domain error value and/or the frequency-domain error value, or equivalently, the M carriers meet the time-domain error value and/or the frequency-domain error value. M is an integer greater than or equal to 2.

Manner 3: The first information indicates whether signals sent on M carriers meet a time-domain error condition and/or a frequency-domain error condition, or equivalently, the first information indicates whether the M carriers meet the time-domain error condition and/or the frequency-domain error condition. M is an integer greater than or equal to 2.

According to the foregoing method, the terminal device may perform reporting based on the first information, so that the network device can select a proper signal processing algorithm based on the first information, thereby improving sensing performance. For example, when the first information indicates the M carriers, the network device may perform joint processing on sensing signals sent on the M carriers. For another example, when the first information indicates the time-domain error value and/or the frequency-domain error value, the network device may determine, based on whether the time-domain error value and/or the frequency-domain error value meet a requirement for joint processing, whether to perform joint processing on sensing signals sent on the M carriers.

It should be understood that the signal sent by the terminal device is an actually sent signal. The signal may be signals respectively sent on the M carriers, or may be signals respectively sent on a part of carriers among the M carriers. The signal may further include a signal sent on a carrier other than the M carriers. This is not limited in this application.

According to a second aspect, this application provides a communication method. The method may be performed by a second communication apparatus. For example, the second communication apparatus may be a network device, a component (for example, a chip or a chip system) in a network device, or a component (for example, a central unit (central unit, CU), a distributed unit (distributed unit, DU), or a radio unit (radio unit, RU)) that implements a part of functions of a network device. This is not limited. For example, an execution body is the network device. The method may include: The network device receives first information; and the network device receives a signal or an echo signal of the signal, where the signal is used for sensing. The first information has the following implementations.

Manner 1: The first information indicates M carriers. Signals sent on the M carriers meet a time-domain error condition and/or a frequency-domain error condition, or equivalently, the M carriers meet the time-domain error condition and/or the frequency-domain error condition. M is an integer greater than or equal to 2.

Manner 2: The first information indicates a time-domain error value and/or a frequency-domain error value. Signals sent on M carriers meet the time-domain error value and/or the frequency-domain error value, or equivalently, the M carriers meet the time-domain error value and/or the frequency-domain error value. M is an integer greater than or equal to 2.

Manner 3: The first information indicates whether signals sent on M carriers meet a time-domain error condition and/or a frequency-domain error condition, or equivalently, the first information indicates whether the M carriers meet the time-domain error condition and/or the frequency-domain error condition. M is an integer greater than or equal to 2.

According to the foregoing method, the network device may select a proper signal processing algorithm based on the first information reported by a terminal device, thereby improving sensing performance. For example, when the first information indicates the M carriers, the network device may perform joint processing on sensing signals sent on the M carriers. For another example, when the first information indicates the time-domain error value and/or the frequency-domain error value, the network device may determine, based on whether the time-domain error value and/or the frequency-domain error value meet a requirement for joint processing, whether to perform joint processing on sensing signals sent on the M carriers.

It should be understood that the signal or the echo signal of the signal received by the network device is a signal or an echo signal actually received by the network device. The signal or the echo signal may be signals respectively received on the M carriers, or may be signals respectively received on a part of carriers among the M carriers. The signal may further include a signal received on a carrier other than the M carriers. This is not limited in this application.

With reference to the second aspect, optionally, the network device performs sensing based on the received signal or the echo signal of the signal.

With reference to the first aspect or the second aspect, optionally, the M carriers indicated by the first information are supported by the terminal device, and signals sent by the terminal device on the M carriers meet the time-domain error condition and/or the frequency-domain error condition. Alternatively, the time-domain error value and/or the frequency-domain error value that are/is indicated by the first information are/is supported by the terminal device, and signals sent by the terminal device on the M carriers meet the time-domain error value and/or the frequency-domain error value. Alternatively, the first information indicates whether signals sent by the terminal device on the M carriers meet the time-domain error condition and/or the frequency-domain error condition.

It should be understood that the following M signals are M signals respectively sent on the M carriers. The transmission herein is intended to describe a signal sending capability of the terminal device, and is hypothetical transmission. The terminal device may not send the M signals in an actual system, and the network device may not receive the M signals in an actual system. The M signals may also be assumed to be signals sent at a full bandwidth.

With reference to the first aspect or the second aspect, optionally, the time-domain error condition has the following implementations.

Manner 1: A time interval between any two of the M signals is less than or equal to a first threshold, or equivalently, a maximum time interval between any two of the M signals is equal to the first threshold.

Manner 2: A time interval between a time domain position of each of the M signals and a first time domain position is less than or equal to the first threshold, or equivalently, a maximum time interval between the time domain position of each of the M signals and the first time domain position is equal to the first threshold.

Manner 3: A time interval between timings of any two of the M carriers is less than or equal to the first threshold, or equivalently, a maximum time interval between timings of any two of the M carriers is equal to the first threshold.

Further, the first threshold may be a time-domain error value on the order of nanoseconds. The first threshold is less than 65 ns. For example, the first threshold is 10 ns.

With reference to the first aspect or the second aspect, optionally, the frequency-domain error condition is a frequency-domain error condition that is met between different carriers or between signals sent on different carriers. The frequency-domain error condition has the following implementations.

Manner 1: An absolute value of a difference between a first frequency spacing and a frequency spacing between center frequencies of any two of the M carriers is less than or equal to a second threshold, or equivalently, a maximum value of the absolute value of the difference between the first frequency spacing and the frequency spacing between the center frequencies of any two of the M carriers is equal to the second threshold, or a value obtained by taking a frequency spacing between center frequencies of any two of the M carriers modulo a first subcarrier spacing is less than or equal to a second threshold, or equivalently, a maximum value obtained by taking the frequency spacing between center frequencies of any two of the M carriers modulo the first subcarrier spacing is equal to the second threshold.

The first frequency spacing may be an integer multiple of the first subcarrier spacing, or expressed as *Kf.* K is a positive integer, and *f* represents the first subcarrier spacing. The first subcarrier spacing may be a minimum subcarrier spacing among subcarrier spacings configured/supported by the system, any one of the subcarrier spacings configured/supported by the system, or a subcarrier spacing of any size specified in a protocol. This is not limited in this application.

Manner 2: An absolute value of a difference between a first frequency spacing and a frequency spacing between any two of the M signals is less than or equal to a second threshold, or equivalently, a maximum value of the absolute value of the difference between the first frequency spacing and the frequency spacing between any two of the M signals is equal to the second threshold, or a value obtained by taking a frequency spacing between any two of the M signals modulo a first subcarrier spacing is less than or equal to a second threshold, or equivalently, a maximum value obtained by taking the frequency spacing between any two of the M signals modulo the first subcarrier spacing is equal to the second threshold.

The first frequency spacing may be an integer multiple of the first subcarrier spacing, or expressed as *Kf.* K is a positive integer, and *f* represents the first subcarrier spacing. The first subcarrier spacing may be a minimum subcarrier spacing among subcarrier spacings configured/supported by the system, any one of the subcarrier spacings configured/supported by the system, or a subcarrier spacing of any size specified in a protocol. This is not limited in this application.

Further, the foregoing second threshold may be a frequency-domain error value on the order of hundreds of hertz. For example, the second threshold is 100 Hz.

With reference to the first aspect or the second aspect, optionally, the time-domain error condition and/or the frequency-domain error condition meet/meets the requirement for the joint processing or a condition for coherent detection.

With reference to the first aspect or the second aspect, optionally, in an implementation 2 of the first information, the first information indicates the time-domain error value and/or the frequency-domain error value instead of indicating whether the time-domain error condition and/or the frequency-domain error condition are/is met. For the time-domain error value, refer to the foregoing first threshold. For the frequency-domain error value, refer to the foregoing second threshold. The terminal device uses a value of the first threshold and/or a value of the second threshold that can be reached by the terminal device as the time-domain error value and/or the frequency-domain error value, and reports the time-domain error value and/or the frequency-domain error value based on the first information. In the implementation 2 of the first information, meeting the time-domain error value and/or the frequency-domain error value may be understood as meeting a time-domain error condition present when the first threshold takes the time-domain error value and/or meeting a frequency-domain error condition present when the second threshold takes the frequency-domain error value.

With reference to the first aspect or the second aspect, optionally, there are corresponding indication manners corresponding to implementations 1 to 3 of the first information.

Corresponding to the implementation 1: The first information includes N pieces of sub-information, the N pieces of sub-information respectively correspond to N carriers, N is an integer greater than or equal to M, and the M carriers are a part or all of the N carriers. M pieces of sub-information that are in the N pieces of sub-information and that correspond to the M carriers indicate a first state, and N-M pieces of sub-information other than the M pieces of sub-information in the N pieces of sub-information indicate a second state.

Corresponding to the implementation 2: The first information includes the time-domain error value and/or the frequency-domain error value. Further, the first information further includes indication information indicating the M carriers. For the indication information indicating the M carriers, refer to the indication manner corresponding to the implementation 1.

Corresponding to the implementation 3: The first information includes a third state or a fourth state. The third state indicates that the signals sent on the M carriers meet the time-domain error condition and/or the frequency-domain error condition, and the fourth state indicates that the signals sent on the M carriers do not meet the time-domain error condition and/or the frequency-domain error condition. Further, the first information further includes indication information indicating the M carriers. For the indication information indicating the M carriers, refer to the indication manner corresponding to the implementation 1.

With reference to the first aspect or the second aspect, optionally, the signal is a sensing signal, a sounding reference signal, a demodulation reference signal, or a physical uplink shared channel (physical uplink shared channel, PUSCH).

With reference to the first aspect or the second aspect, optionally, at least two of the foregoing signals use different radio access technologies respectively. The different radio access technologies include a long term evolution (long term evolution, LTE) technology, a 5G new radio (New Radio, NR) technology, a 6th generation (6th-generation, 6G) radio access technology, or a future evolved radio access technology. This is not limited in this application.

With reference to the first aspect or the second aspect, optionally, the first information may be carried in radio resource control (radio resource control, RRC) signaling, carried in uplink control information (uplink control information, UCI), or carried in a medium access control control element (Media Access Control control element, MAC CE).

According to a third aspect, this application further provides a communication apparatus. The communication apparatus is configured to perform the method according to any one of the first aspect and the possible designs of the first aspect. For example, the communication apparatus is a first communication apparatus.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

Optionally, the communication apparatus may include a transceiver module, configured to send first information. The transceiver module is further configured to send a signal, where the signal is used for sensing.

According to a fourth aspect, this application further provides a communication apparatus. The communication apparatus is configured to perform the method according to any one of the second aspect and the possible designs of the second aspect. For example, the communication apparatus is a second communication apparatus.

In a possible design, the communication apparatus includes a baseband apparatus and a radio frequency apparatus.

In another possible design, the communication apparatus includes a processing module (sometimes also referred to as a processing unit) and a transceiver module (sometimes also referred to as a transceiver unit). The transceiver module can implement a sending function and a receiving function. When the transceiver module implements the sending function, the transceiver module may be referred to as a sending module (sometimes also referred to as a sending unit). When the transceiver module implements the receiving function, the transceiver module may be referred to as a receiving module (sometimes also referred to as a receiving unit). The sending module and the receiving module may be a same functional module, the functional module is referred to as the transceiver module, and the functional module can implement the sending function and the receiving function. Alternatively, the sending module and the receiving module may be different functional modules, and the transceiver module is a general term for these functional modules.

Optionally, the communication apparatus may include a transceiver module, configured to receive first information. The transceiver module is further configured to receive a signal, where the signal is used for sensing.

With reference to the third aspect or the fourth aspect, for descriptions of the first information, the signal, and the time-domain error condition and/or the frequency-domain error condition, refer to the first aspect or the second aspect. Details are not described again.

According to a fifth aspect, this application further provides a communication apparatus. The communication apparatus may include one or more processors. Optionally, the communication apparatus may further include a memory. The memory is configured to store one or more computer programs or instructions. The one or more processors are configured to execute one or more computer programs or instructions, so that the communication apparatus performs the method according to any one of the first aspect or the second aspect and the possible designs of the first aspect or the second aspect.

According to a sixth aspect, this application further provides a communication system. The communication system includes one or more of the following: the communication apparatus according to the third aspect or the communication apparatus according to the fourth aspect.

According to a seventh aspect, this application further provides a computer-readable storage medium. The computer-readable storage medium is configured to store a computer program or instructions. When the computer program or the instructions are run, the method according to any one of the first aspect or the second aspect and the possible designs of the first aspect or the second aspect is implemented.

According to an eighth aspect, this application further provides a computer program product including instructions. When the computer program product is run on a computer, the method according to any one of the first aspect or the second aspect and the possible designs of the first aspect or the second aspect is implemented.

According to a ninth aspect, this application further provides a chip system, including at least one processor, configured to: read and execute program instructions in a memory, so that the chip system implements the method according to any one of the first aspect and the possible designs of the first aspect, or implements the method according to any one of the second aspect and the possible designs of the second aspect. Optionally, the chip system may include a chip, or may include a chip and another discrete component. This is not limited.

For technical effects that can be achieved in any one of the third aspect to the ninth aspect and the possible design manners of the second aspect to the thirteenth aspect, correspondingly refer to the technical effects that can be achieved in any one of the first aspect and the possible designs of the first aspect. Details are not described again.

### BRIEF DESCRIPTION OF DRAWINGS

FIG. 1 is a diagram of network architecture of a communication system;
FIG. 2 is a diagram of a sensing scenario;
FIG. 3 is a diagram of intra-band CA and inter-band CA according to an embodiment of this application;
FIG. 4A and FIG. 4B are diagrams of intra-site CA and inter-site CA according to an embodiment of this application;
FIG. 5 is a diagram of intra-site DC according to an embodiment of this application;
FIG. 6 is a diagram of inter-site DC according to an embodiment of this application;
FIG. 7 is a schematic flowchart of a communication method according to an embodiment of this application;
FIG. 8A to FIG. 8C are diagrams of a time-domain error condition in a case of two carriers according to this application;
FIG. 9A and FIG. 9B are diagrams of a frequency-domain error condition in a case of two carriers according to this application;
FIG. 10 is a diagram of desirable signal sending in a case of two carriers according to this application;
FIG. 11 is a diagram of a structure of a communication apparatus according to an embodiment of this application;
FIG. 12 is a diagram of a structure of another communication apparatus according to an embodiment of this application; and
FIG. 13 is a diagram of a structure of still another communication apparatus according to an embodiment of this application.

### DESCRIPTION OF EMBODIMENTS

A network architecture and a service scenario that are described in this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

In embodiments of this application, "a plurality of" may mean two or more. In view of this, in embodiments of this application, "a plurality of" may also be understood as "at least two". "At least one" may be understood as one or more, for example, one, two, or more. For example, "including at least one" means including one, two, or more. For example, including at least one of A, B, and C means that A, B, C, A and B, A and C, B and C, or A, B, and C may be included. "And/or" describes an association relationship between associated objects and three relationships may specifically exist. For example, A and/or B may represent the following three cases: Only A exists, both A and B exist, and only B exists. In addition, unless otherwise specified, the character "/" generally indicates an "or" relationship between the associated objects.

In addition, the terms "system" and "network" in embodiments of this application may be used interchangeably, and "according to" and "based on" may be used interchangeably.

Ordinal numerals such as "first" and "second" mentioned in embodiments of this application are usually used for distinguishing between different objects, but are not intended to limit a sequence, a time sequence, priorities, importance, or the like of a plurality of objects. For example, the first communication apparatus and the second communication apparatus in embodiments of this application are configured to distinguish between two communication apparatuses, but do not limit priorities, importance, or the like of the two communication apparatuses.

Embodiments of this application are presented with respect to a system including a plurality of devices, components, modules, or the like. It should be understood that the system may include other devices, components, modules, or the like that are not mentioned, or may include only a part of devices, components, modules, or the like that are mentioned in embodiments.

The following first describes a communication system to which embodiments of this application are applicable.

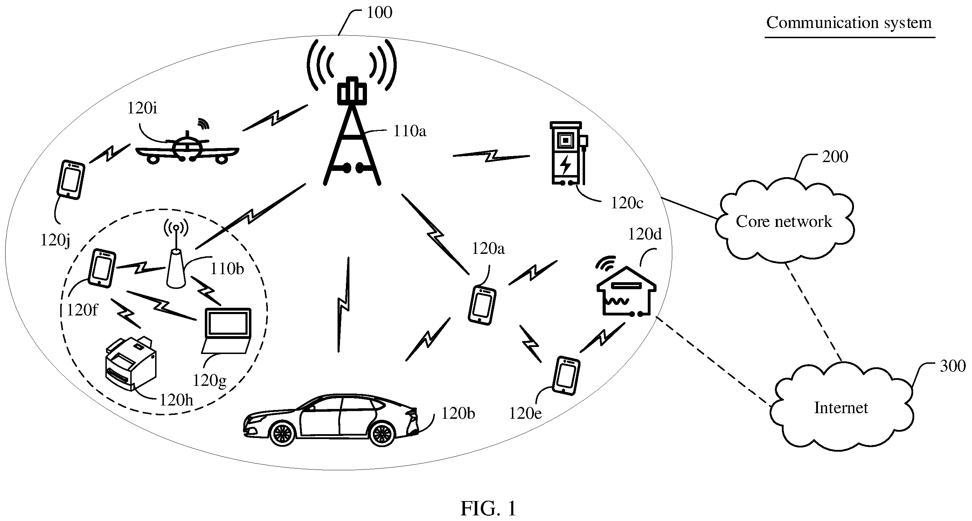

The technical solutions in embodiments of this application may be applied to various communication systems, for example, a universal mobile telecommunications system (universal mobile telecommunications system, UMTS), a wireless local area network (wireless local area network, WLAN), a short-range wireless communication system (for example, a sidelink (sidelink) system, a wireless fidelity (wireless fidelity, Wi-Fi) system, or a Bluetooth system), a wired network, a vehicle to everything (vehicle to everything, V2X) communication system, a device-to-device (device to device, D2D) communication system, and an internet of vehicles communication system, a 4th generation (4th generation, 4G) mobile communication system (for example, a long term evolution (long term evolution, LTE) system), an LTE frequency division duplex (frequency division duplex, FDD) system, LTE time division duplex (time division duplex, TDD), a worldwide interoperability for microwave access (worldwide interoperability for microwave access, WiMAX) communication system, a 5th generation (5th generation, 5G) mobile communication system (for example, a new radio (new radio, NR) system), a future communication system (for example, a 6th generation (6th generation, 6G) mobile communication system), or another similar communication system. This is not limited. In embodiments of this application, the communication system shown in FIG. 1 is used as an example for description. When the technical solutions in embodiments of this application are applied to another communication system, a device, component, module, and the like in embodiments may be replaced with a corresponding device, component, and module in the another communication system. This is not limited.

FIG. 1 is a diagram of an architecture of a communication system to which embodiments of this application are applied. As shown in FIG. 1, the communication system includes an access network 100 and a core network 200. Optionally, the communication system may further include an internet 300. The access network 100 may include at least one radio access network (radio access network, RAN) node, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 1 include 120a, 120e, 120f, and 120j. The mobile phone 120a may access the base station 110a, be connected to the vehicle 120b, directly communicate with the mobile phone 120e, and access the HAP. The vehicle 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The network device is a network-side device having a wireless transceiver function. The network device may be an apparatus that is in a radio access network (radio access network, RAN) and that provides a wireless communication function for the terminal device, and is referred to as a RAN device. The RAN may be an access network in the 3^{rd} generation partnership project (3^{rd} generation partnership project, 3GPP), for example, a 4G network, a 5G network, or a future-oriented 6G network. Alternatively, the RAN may be an open radio access network (open RAN, O-RAN or ORAN), a cloud radio access network (cloud radio access network, CRAN), or a communication network of two or more of the foregoing networks.

The RAN device may alternatively be a base station (base station), an evolved NodeB (evolved NodeB, eNodeB), a transmission reception point (transmission reception point, TRP), a next generation NodeB (next generation NodeB, gNB) in a 5G mobile communication system, a base station in a 6G mobile communication system, a base station in a future mobile communication system, an access node in a Wi-Fi system, or the like.

The RAN device may alternatively be a module or unit that completes a part of functions of the base station, for example, a central unit (central unit, CU), a distributed unit (distributed unit, DU), or a radio unit (radio unit, RU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, reference may be made to technical specifications related to the 3^{rd} generation partnership project (3^{rd} generation partnership project, 3GPP). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, the CU may also be referred to as an O-CU (open CU), the DU may also be referred to as an O-DU, and the RU may also be referred to as an O-RU. Any unit of the CU (or the CU-CP or the CU-UP), the DU, and the RU in this application may be implemented by using a software module, a hardware module, or a combination of a software module and a hardware module. The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

In embodiments of this application, the function of the network device may alternatively be performed by a module (for example, a chip) in the network device, or may be performed by a control subsystem having the function of the network device. The control subsystem having the function of the network device herein may be a control center in the foregoing application scenarios such as a smart grid, industrial control, smart transportation, and a smart city.

The terminal device is a user-side device having a wireless transceiver function. The terminal device may also be referred to as a terminal, user equipment (user equipment, UE), a mobile station, a mobile terminal, or the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, a smart office, smart wearable, smart transportation, and a smart city. The terminal device may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. In embodiments of this application, an apparatus configured to implement a function of the terminal device may be the terminal device, or may be an apparatus that supports the terminal device in implementing the function, for example, a chip system or a combined component or part that can implement the function of the terminal device. The apparatus may be mounted in the terminal device. A specific technology and a specific device form used by the terminal device are not limited in embodiments of this application.

In embodiments of this application, the function of the terminal device may alternatively be performed by a module (for example, a chip or a modem) in the terminal device, or may be performed by an apparatus having the function of the terminal device.

The network device and the terminal device may be at a fixed position, or may be movable. The network device and the terminal device may be deployed on land, including an indoor device, an outdoor device, a handheld device, or a vehicle-mounted device; may be deployed on water; or may be deployed on an airplane, a balloon, and a satellite in the air. Application scenarios of the network device and the terminal device are not limited in embodiments of this application.

Roles of the network device and the terminal device may be relative. For example, a helicopter or the uncrewed aerial vehicle 120i in FIG. 1 may be configured as a mobile network device. For the terminal device 120j that accesses the radio access network 100 via 120i, the terminal device 120i is a network device. However, for the network device 110a, 120i is a terminal device. In other words, 110a and 120i communicate with each other according to a wireless air interface protocol. Certainly, 110a and 120i may alternatively communicate with each other according to an interface protocol between network devices. In this case, for 110a, 120i is also a network device. Therefore, both the network device and the terminal device may be collectively referred to as a communication apparatus. 110a and 110b in FIG. 1 may be referred to as a communication apparatus having the function of the network device, and 120a to 120j in FIG. 1 may be referred to as a communication apparatus having the function of the terminal device.

Communication between a network device and a terminal device, between network devices, and between terminal devices may be performed through a licensed spectrum, may be performed through an unlicensed spectrum, or may be performed through both a licensed spectrum and an unlicensed spectrum. This is not limited.

In embodiments of this application, a transmit end device is a transmit end of a sensing signal, and a receive end device is a receive end of an echo signal of the sensing signal. For example, the transmit end device may be the terminal device in FIG. 1, and the receive end device may be the network device in FIG. 1. Alternatively, the transmit end device and the receive end device are the terminal devices in FIG. 1. This is not limited.

A sensing technology may generally be classified into two modes: monostatic sensing and bistatic sensing. The monostatic sensing mode means that a transmit end device of a sensing signal and a receive end device of an echo signal of the sensing signal are a same device. In other words, in the monostatic sensing mode, the transmit end device needs to send the sensing signal and receive the echo signal, of the sensing signal, reflected from a surface of a target. Therefore, the monostatic sensing mode may also be referred to as a self-transmission and self-reception mode. This is not limited. The bistatic sensing mode means that a transmit end device of a sensing signal and a receive end device of an echo signal of the sensing signal are two different devices. In other words, a sensing station A sends the sensing signal, and the echo signal, of the sensing signal, reflected from a surface of a target is received by a sensing station B. Therefore, the bistatic sensing mode may also be referred to as an A-transmit-B-receive mode.

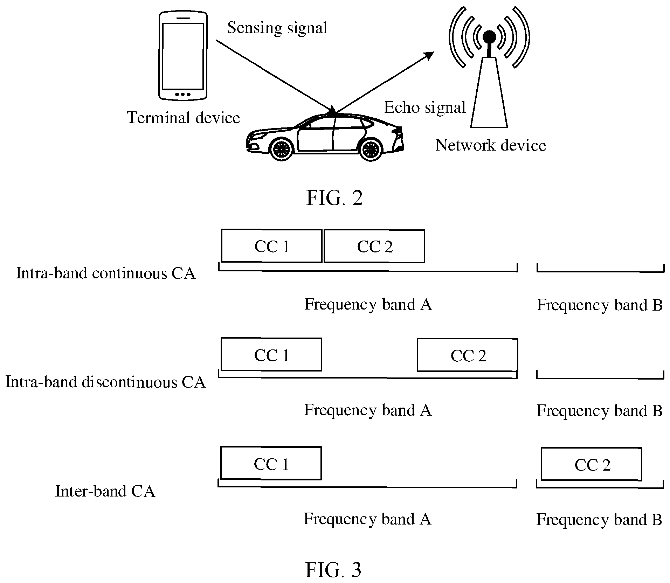

FIG. 2 is a diagram of an example of a sensing scenario to which embodiments of this application are applicable. FIG. 2 provides a scenario, to which embodiments of this application are applicable, in which a terminal device sends a sensing signal and a network device receives an echo signal. It should be noted that, in FIG. 2, an example in which a sensed target is a vehicle is used, but embodiments of this application are not limited thereto. For example, the sensed target may alternatively be a pedestrian, a low-altitude uncrewed aerial vehicle, or another moving or static object. In FIG. 2, an example in which the terminal device is a smartphone is used. Embodiments of this application are also not limited thereto. In FIG. 2, an example in which the network device receives the echo signal is used. Embodiments of this application are also not limited thereto. The network device may alternatively be another terminal device.

The following first describes technical terms in embodiments of this application.

### (1) Carrier aggregation (Carrier Aggregation, CA)

CA can aggregate a plurality of carriers to serve one terminal device at the same time. The terminal device may also receive and send data on a plurality of carriers at the same time. One carrier is referred to as a primary component carrier (Primary Component Carrier, PCC), a cell corresponding to the PCC is referred to as a primary cell (Primary Cell, PCell), another carrier is referred to as secondary component carrier (Secondary Component Carrier, SCC), and a cell corresponding to the SCC is referred to as a secondary cell (Secondary Cell, SCell). Based on whether component carriers (Component Carrier, CC) for aggregation belong to a same frequency band and are continuous in frequency domain, CA may be classified into:
i. intra-band continuous carrier aggregation: The CCs belong to a same frequency band, and are continuous in frequency domain;
ii. intra-band discontinuous carrier aggregation: The CCs belong to a same frequency band, but are discontinuous in frequency domain; and
iii. inter-band carrier aggregation: The CCs belong to different frequency bands.

Carrier aggregation of two CCs is used as an example, and the foregoing aggregation is shown in FIG. 3.

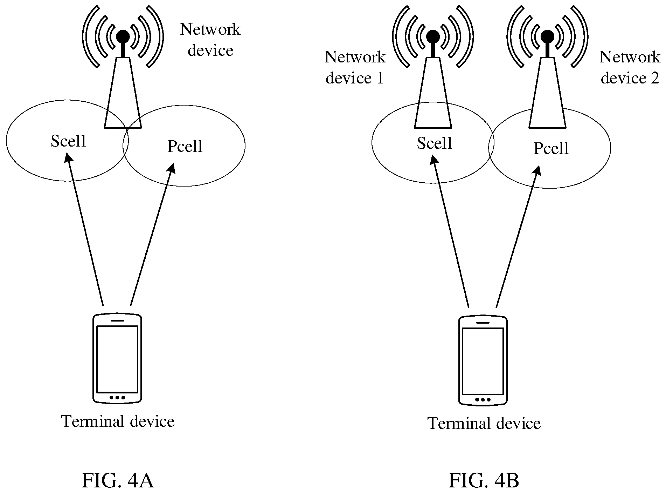

It should be noted that the primary cell and the secondary cell may be managed by a same network device (referred to as intra-site CA), or the primary cell and the secondary cell may be managed by different network devices (referred to as inter-site CA). Network devices that respectively manage the primary cell and the secondary cell in a case of inter-site CA are network devices of a same RAT. FIG. 4A and FIG. 4B are diagrams of intra-site CA and inter-site CA. FIG. 4A shows intra-site CA, and FIG. 4B shows inter-site CA.

### (2) Dual connectivity (Dual Connectivity, DC)

A terminal device supports simultaneous access to two network devices, where one network device is a primary network device, and the other network device is a secondary network device. In a development and evolution process of a wireless communication system, an operator may deploy both a 5G NR system and an LTE system, and the terminal device also supports simultaneous access to an LTE network device and an NR network device. Because LTE is also referred to as evolved universal terrestrial radio access (evolved universal terrestrial radio access, E-UTRA), this access manner is referred to as evolved universal terrestrial radio access new radio dual connectivity (E-UTRA NR Dual Connectivity, EN-DC). In an EN-DC mode, the LTE network device is a primary network device, and the NR network device is a secondary network device. Certainly, with evolution of the system, new radio and evolved universal terrestrial radio access dual connectivity (NR E-UTRA Dual Connectivity, NE-DC) may also be supported in the future. In other words, the NR network device is a primary network device, and the LTE network device is a secondary network device.

During development and evolution of a future wireless communication system, there is also a next generation system beyond 5G. The terminal device may also support simultaneous access to a 5G system and the next generation system beyond 5G, and the terminal device may also support simultaneous access to three or more systems. The foregoing RAT technology is one of LTE, 5G NR, and a next generation technology beyond 5G (5.5G or 6G). Different RAT technologies may have a same carrier frequency or different carrier frequencies. This is not required herein.

In a DC scenario, the terminal device accesses a corresponding communication system by using a corresponding radio access technology (Radio Access Technology, RAT). The terminal device may communicate with network devices in different systems on at least two carriers by using different RATs.

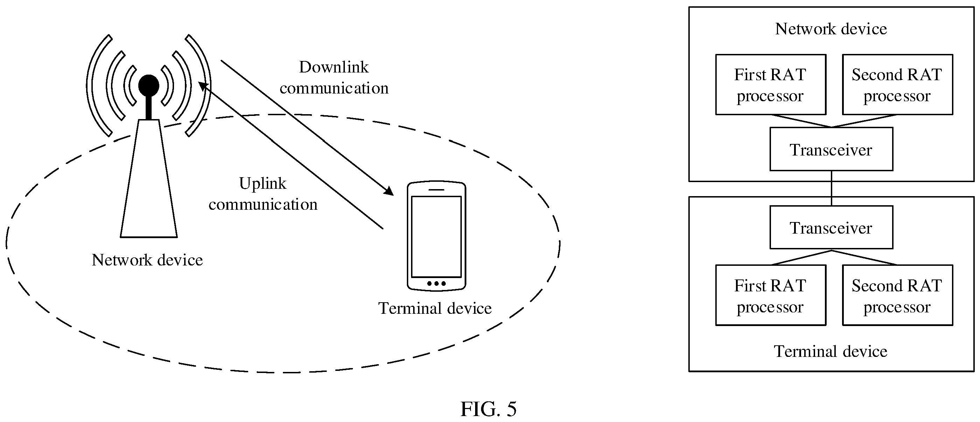

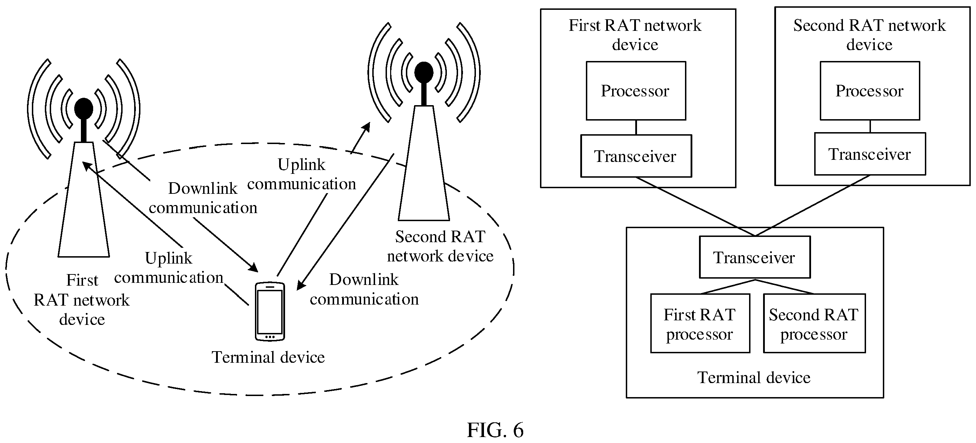

It should be noted that, in a mode in which the terminal device simultaneously accesses a network device of a first RAT and a network device of a second RAT, the network device of the first RAT and the network device of the second RAT may be deployed at a same site, which is shown in FIG. 5, or may be deployed at different sites, which is shown in FIG. 6. When deployed at the same site, the network device of the first RAT and the network device of the second RAT may share a same set of hardware devices, or may use different hardware devices.

### (3) Coherent detection of sensing signals

The method provided in this application is applicable to at least the following scenarios. In the following scenarios, a terminal device supports sending sensing signals on a plurality of carriers. With evolution of communication technologies, there may be another scenario. This is not limited in this application.

Scenario 1: Scenario of CA in a same RAT. The terminal device sends sensing signals on carriers of a primary cell and a secondary cell respectively, and network devices of the primary cell and the secondary cell determine sensing measurement quantities based on received sensing signals.

Scenario 2: DC scenario. The terminal device sends sensing signals on carriers of a first RAT and a second RAT respectively, and network devices of the first RAT and the second RAT determine sensing measurement quantities based on received sensing signals.

Scenario 3: Scenario in which CA in each RAT is supported in a DC scenario.

Based on sensing signals sent on a plurality of carriers, a receive end of the sensing signals may perform joint processing, to improve accuracy of a sensing measurement result. Such joint processing may be referred to as correlation processing, correlation detection, coherent processing, coherent detection, coherent fusion detection, fusion detection, or the like. This is not limited in this application, and names are interchangeable.

In possible coherent detection, for example, it is assumed that the terminal device and a network device run in an intra-site intra-band continuous CA scenario, and send signals on two carriers. Through analysis of baseband signal processing, a symbol, carried on a *k*₁^{th} subcarrier and an *l*^{th} symbol, of a sensing signal sent on a 1^{st} carrier is denoted as *c*_{*k*1,*l*}, and a symbol, carried on a *k*₂^{th} subcarrier and the *l*^{th} symbol, of a sensing signal sent on a 2^{nd} carrier is denoted as *c*_{*k*2}*_{,l}.* In this case, an echo signal of the *l*^{th} symbol that is correspondingly received by a base station may be represented as: $r = {\sum }_{{k}_{1}}^{{K}_{1}} a \left({c}_{k 1 , l}\right) {e}^{j 2 {πT}_{1} {f}_{D} l} {e}^{- j 2 {πτk}_{1} Δ {f}_{1}} + {\sum }_{{k}_{2}}^{{K}_{2}} b \left({c}_{k 2 , l}\right) {e}^{j 2 {πT}_{2} {f}_{D} l} {e}^{- j 2 {πτk}_{2} Δ {f}_{2}}$
a(*) and b(*) respectively represent fading experienced by a signal during propagation, *T*₁ and *T*₂ represent sensing signal sending periods, *f_{D}* represents a Doppler frequency shift caused by movement, *τ* is a delay experienced by a signal after being reflected by a target, and Δ*f*₁ and Δ*f*₂ represent subcarrier spacings of two signals. In a simple case, to be specific, in a case in which the subcarrier spacings of the two signals are consistent and the sensing signal sending periods are also consistent, when performing joint processing on the signals, a receive end on a network side directly performs L-point discrete Fourier transform (discrete Fourier transform, DFT) and K-point inverse discrete Fourier transform (Inverse Discrete Fourier Transformation, IDFT) on received echo signals together, to obtain a range-Doppler spectrum. L is determined based on a quantity of time-domain symbols of the two sensing signals. For example, L is a total quantity of time-domain symbols occupied by the two sensing signals. K is determined based on an overall frequency domain bandwidth of the two sensing signals or a quantity of subcarriers included in the frequency domain bandwidth. For example, K is a sum of quantities of subcarriers occupied by each of the two sensing signals, or K is a quantity of subcarriers included between a subcarrier with a highest frequency and a subcarrier with a lowest frequency among subcarriers occupied by the two sensing signals. It should be understood that the foregoing coherent detection method is merely an example, and there may be another coherent detection method. This is not limited in this application.

In comparison with separately processing a sensing signal on each carrier, the foregoing coherent detection method can improve the accuracy of the sensing measurement result. This is because the coherent detection method expands a bandwidth of a sensing signal used to process a sensing result. A sensing resolution may be represented in the following formula: $Δ R = \frac{c}{2 B}$

It can be learned that, for detection of the sensing measurement quantity, when a signal bandwidth is larger, a range resolution is smaller, and a stronger range resolution capability of sensing indicates better sensing performance.

However, the receive end performs coherent processing on sensing signals sent on different carriers, which imposes a strict requirement on a signal sending capability of the terminal device. The capability is specifically that signals on different carriers meet a specific alignment condition in time domain and frequency domain. If the receive end performs joint processing on sensing signals that do not meet the requirement, accuracy of a sensing result may be affected.

The following further describes a communication method and a communication apparatus provided in embodiments of this application.

Currently, in a scenario such as a dual connectivity (Dual Connectivity, DC) scenario or a carrier aggregation (Carrier Aggregation, CA) scenario, a terminal device may send sensing signals on a plurality of carriers, but sensing performance of the sensing signals sent on the plurality of carriers needs to be improved. When the terminal device sends the sensing signals on the plurality of carriers, a receive end of the sensing signals may separately process the sensing signal on each carrier, or may jointly process the sensing signals on the plurality of carriers. A joint processing manner can obtain higher sensing performance, but also imposes a requirement on a capability of the terminal device to send signals on a plurality of carriers. If the receive end performs joint processing on sensing signals that do not meet the requirement, accuracy of a sensing result may be affected.

In view of this, embodiments of this application provide a communication method and apparatus, to help improve sensing performance. A terminal device sends first information to a network device, to indicate a capability of the terminal device to send signals on different carriers, so that the network device can select a proper signal processing algorithm (for example, jointly processing sensing signals sent on a plurality of carriers), thereby improving sensing performance. The method and the apparatus in this application are based on a same technical concept. Because problem-resolving principles of the method and the apparatus are similar, mutual reference may be made to implementations of the apparatus and the method, and no repeated description is described again.

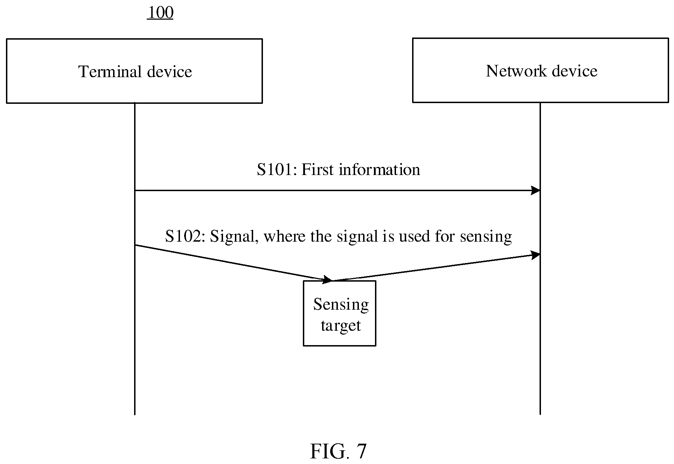

FIG. 7 is a schematic flowchart of a communication method 100. In the following descriptions, an example in which the method is applied to a diagram of a network architecture shown in FIG. 1 is used. The following method is performed by a first communication apparatus and a second communication apparatus. For example, the first communication apparatus may be a terminal device, a component (for example, a chip or a chip system) in a terminal device, or a component that implements a part of functions of a terminal device. For example, the second communication apparatus may be a network device, a component (for example, a chip or a chip system) in a network device, or a component (for example, a CU, a DU, or an RU) that implements a part of functions of a network device. This is not limited. For ease of description, in the following, an example in which the method is performed by the network device and the terminal device is used. Because an example in which embodiments of this application are applied to the network architecture shown in FIG. 1 is used, the network device described below is, for example, an access network device in the network architecture shown in FIG. 1, and the terminal device described below may be a terminal device in the network architecture shown in FIG. 1.

S101: The terminal device sends first information, and correspondingly, the network device receives the first information.

The first information may be carried in radio resource control (radio resource control, RRC) signaling, carried in uplink control information (uplink control information, UCI), or carried in a medium access control control element (Media Access Control control element, MAC CE).

The first information has the following implementations 1 to 3, which are separately described below.

Manner 1: The first information indicates M carriers. Signals sent on the M carriers meet a time-domain error condition and/or a frequency-domain error condition, or equivalently, the M carriers meet the time-domain error condition and/or the frequency-domain error condition. M is an integer greater than or equal to 2.

The M carriers indicated by the first information are supported by the terminal device, and signals sent by the terminal device on the M carriers meet the time-domain error condition and/or the frequency-domain error condition.

For ease of describing the time-domain error condition and/or the frequency-domain error condition, unless otherwise specified, M signals below are M signals respectively sent on the M carriers. Details are not described again subsequently. The transmission herein is intended to describe a signal sending capability of the terminal device, and is hypothetical transmission. The terminal device may not send the M signals in an actual system, and the network device may not receive the M signals in an actual system. The M signals may also be assumed to be signals sent at a full bandwidth. In the following, any two of the M signals may be all combinations of any two signals selected from the M signals. Any two signals on the M carriers may be all combinations of any two carriers selected from the M carriers.

In a possible implementation, that the signals sent on the M carriers meet the time-domain error condition or that the M carriers meet the time-domain error condition may be that a time interval between any two of the M signals is less than or equal to a first threshold, or equivalently, a maximum time interval between any two of the M signals is equal to the first threshold.

A time interval between two signals may be a time interval between sending moments of signals or a time interval determined by another time reference point. This is not limited in this application.

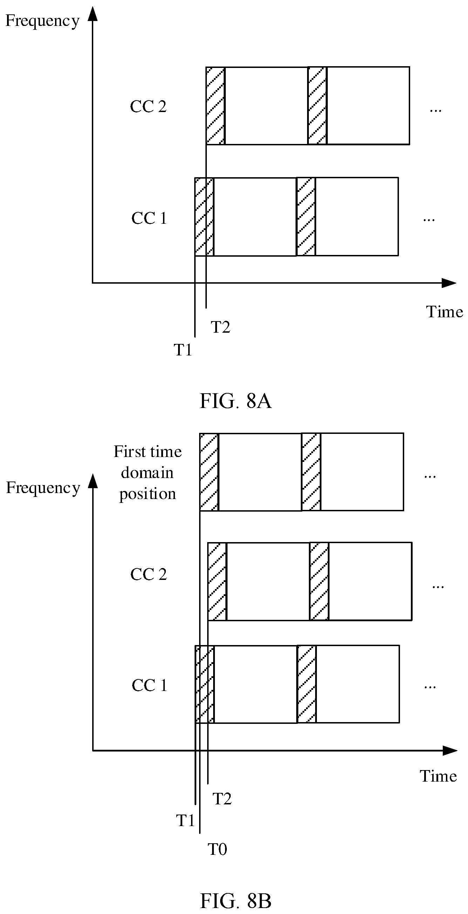

A sending moment of a signal is used as an example. The time interval between the two signals may be represented as an absolute value of a difference between sending moments of the two signals. FIG. 8A is a diagram of a time-domain error condition in a case of two carriers according to this application. Dark parts indicate signals sent on a CC 1 and a CC 2. A sending moment of the signal sent on the CC 1 is T1, and a sending moment of the signal sent on the CC 2 is T2. A time interval between the two signals may be represented as T2-T1 or an absolute value of T1-T2. The foregoing time-domain error condition may be represented as that T2-T1 is less than or equal to the first threshold or the absolute value of T1-T2 is less than or equal to the first threshold. It should be understood that the signal sent on the CC 1 or the CC 2 may be periodically sent, and sending periods of different signals may be different. In a case of periodic transmission, the time interval between the two signals is calculated based on corresponding signals in time domain.

In a possible implementation, that the signals sent on the M carriers meet the time-domain error condition or that the M carriers meet the time-domain error condition may alternatively be that a time interval between a time domain position of each of the M signals and a first time domain position is less than or equal to the first threshold, or equivalently, a maximum time interval between the time domain position of each of the M signals and the first time domain position is equal to the first threshold.

For example, the first time domain position is a time domain position at which a related signal is scheduled to be sent or a time domain position at which a related signal should be sent. The time interval between the time domain position of the signal and the first time domain position may be a time interval between sending moments of signals or a time interval determined by another time reference point. This is not limited in this application.

A sending moment of a signal is used as an example. The time interval between the time domain position of the signal and the first time domain position may be represented as an absolute value of a difference between the sending moment of the signal and a sending moment corresponding to the first time domain position. FIG. 8B is a diagram of a time-domain error condition in a case of two carriers according to this application. Dark parts indicate signals sent on a CC 1 and a CC 2, and first time domain positions at which the two signals are scheduled to be sent or should be sent. A sending moment of the signal sent on the CC 1 is T1, a sending moment of the signal sent on the CC 2 is T2, and a sending moment corresponding to the first time domain position is T0. A time interval between time domain positions of the two signals and the first time domain position may be represented as T2-T0, T0-T1, an absolute value of T0-T2, or an absolute value of T1-T0. The time-domain error condition may be represented as that T2-T0, T0-T1, the absolute value of T0-T2, or the absolute value of T1-T0 is less than or equal to the first threshold. It should be understood that the signal sent on the CC 1 or the CC 2 may be periodically sent, and sending periods of different signals may be different. In a case of periodic transmission, the time interval between the two signals is calculated based on corresponding signals in time domain.

In a possible implementation, that the signals sent on the M carriers meet the time-domain error condition or that the M carriers meet the time-domain error condition may alternatively be that a time interval between timings of any two of the M carriers is less than or equal to the first threshold, or equivalently, a maximum time interval between timings of any two of the M carriers is equal to the first threshold.

A timing of a carrier is a timing of a time unit divided on the carrier. The timing may be represented by using a boundary of a frame, a subframe, a slot, a symbol, or the like. This is not limited in this application.

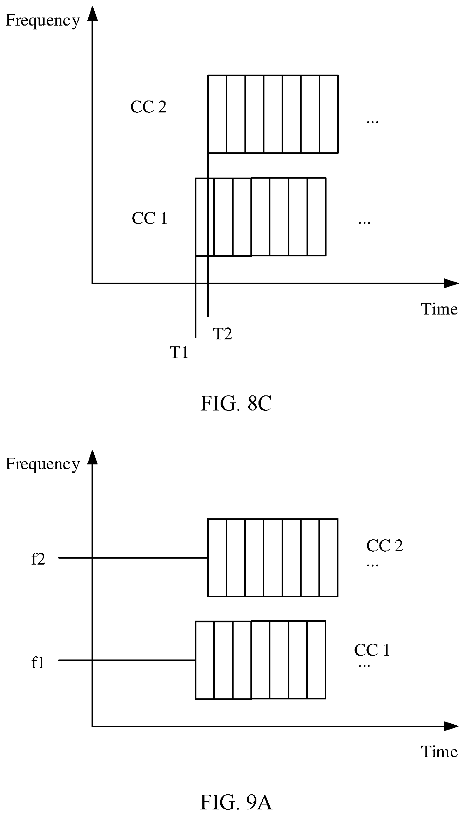

The boundary of the symbol is used as an example. A time interval between timings of two carriers may be represented as an absolute value of a difference between a symbol boundary of the CC 1 and a symbol boundary of the CC 2. FIG. 8C is a diagram of a time-domain error condition in a case of two carriers according to this application. One grid of the CC 1 or the CC 2 is one symbol on the CC 1 or the CC 2. The symbol boundary of the CC 1 is T1, the symbol boundary of the CC 2 is T2, and the time interval between the timings of the two carriers may be represented as T2-T1 or an absolute value of T1-T2. The foregoing time-domain error condition may be represented as that T2-T1 is less than or equal to the first threshold or the absolute value of T1-T2 is less than or equal to the first threshold.

Further, the first threshold may be a time-domain error value on the order of nanoseconds. The first threshold is less than 65 ns.

In an example, the first threshold is 10 ns or 50 ns. For example, time-domain errors of different carriers are denoted as Δ*T*. When the network device performs joint processing to obtain a range spectrum, it may be considered that two peak points may be detected at an actual position of a target and at a position offset from the target by $c ∗ \frac{Δ T}{2}$. c represents a speed of light. If the two peak points can be identified separately, that is, the two peak points are greater than a range resolution of the system, a false alarm in detection is caused. In conclusion, for a setting of a time error threshold, reference may be made to that of the range resolution of the system, to avoid the false alarm in detection, so that $\frac{c Δ T}{2} \leq \frac{c}{2 B} , that is , Δ T \leq \frac{1}{B}$

According to the foregoing formula, when a bandwidth is 100 MHz, a time-domain error threshold is 10 ns. Alternatively, when a bandwidth is 200 MHz, a time-domain error threshold is 5 ns. Alternatively, when a bandwidth is 400 MHz, a time-domain error threshold is 2.5 ns. It should be understood that different time-domain error thresholds may alternatively be determined according to another threshold determining criterion. The foregoing is merely an example. This is not limited in this application. It should be understood that, in this application, ns stands for nanosecond, MHz stands for megahertz, kHz stands for kilohertz, and Hz stands for hertz. Details are not described below again.

In a possible implementation, that the signal sent on the M carriers meets the frequency-domain error condition or that the M carriers meet the frequency-domain error condition may be that an absolute value of a difference between a first frequency spacing and a frequency spacing between center frequencies of any two of the M carriers is less than or equal to a second threshold, or equivalently, a maximum value of the absolute value of the difference between the first frequency spacing and the frequency spacing between the center frequencies of any two of the M carriers is equal to the second threshold, or a value obtained by taking a frequency spacing between center frequencies of any two of the M carriers modulo a first subcarrier spacing is less than or equal to a second threshold, or equivalently, a maximum value obtained by taking the frequency spacing between the center frequencies of any two of the M carriers modulo the first subcarrier spacing is equal to the second threshold.

The first frequency spacing may be an integer multiple of the first subcarrier spacing, or expressed as *Kf.* K is a positive integer, and *f* represents the first subcarrier spacing. K represents a multiple relationship, and a value of K is related to a frequency spacing between center frequencies of two carriers. Specifically, K is a multiple value that minimizes an absolute value of a difference between the first frequency spacing and the frequency spacing between the center frequencies of the two carriers. The first subcarrier spacing may be a minimum subcarrier spacing among subcarrier spacings configured/supported by the system, any one of the subcarrier spacings configured/supported by the system, or a subcarrier spacing of any size specified in a protocol. This is not limited in this application. For example, *f* is 15 kHz, 30 kHz, or 60 kHz. Alternatively, *f* is 5 kHz.

In another possible implementation, the first frequency spacing may be a frequency spacing between center frequencies that are scheduled or configured for two carriers, or a frequency spacing between center frequencies at which two carriers should be located. This is not limited in this application.

The absolute value of the difference may alternatively be replaced with a spacing or a difference (difference). The frequency spacing between the center frequencies of the two carriers may alternatively be replaced with a frequency spacing between lowest frequencies of bandwidths of the two carriers, a frequency spacing between highest frequencies of bandwidths of the two carriers, or a frequency spacing between start frequencies of bandwidths of the two carriers. The foregoing center frequency, lowest frequency, highest frequency, or start frequency may be a frequency, or a center frequency of a subcarrier on which the frequency is located.

A center frequency of a carrier is used as an example. An absolute value of a difference between the first frequency spacing and the frequency spacing between the center frequencies of the two carriers may be represented as an absolute value of a difference between *Kf* and a frequency spacing between a center frequency of a CC 1 and a center frequency of a CC 2. K is a positive integer, and *f* represents the first subcarrier spacing. FIG. 9A is a diagram of a frequency-domain error condition in a case of two carriers according to this application. A width occupied by one grid in frequency is a bandwidth of the CC 1 or the CC 2, where f1 is the center frequency of the CC 1, and f2 is the center frequency of the CC 2. A frequency spacing between center frequencies of these two carriers may be represented as f2-f1 or an absolute value of f1-f2. The foregoing frequency-domain error condition may be represented as that f2-f1-*Kf* is less than or equal to the second threshold or an absolute value of f2-f1-*Kf* is less than or equal to the second threshold. Alternatively, the frequency-domain error condition may alternatively be represented as that (f2-f1) mod *f* is less than or equal to the second threshold or (an absolute value of f2-f1) mod *f* is less than or equal to the second threshold.

It should be understood that, in this application, a result of A mod B is a remainder obtained by dividing A by B. In other words, A is a dividend, and B is a divisor. Details are not described below again.

In a possible implementation, that the signal sent on the M carriers meets the frequency-domain error condition or that the M carriers meet the frequency-domain error condition may alternatively be that an absolute value of a difference between a first frequency spacing and a frequency spacing between any two of the M signals is less than or equal to a second threshold, or equivalently, a maximum value of the absolute value of the difference between the first frequency spacing and the frequency spacing between any two of the M signals is equal to the second threshold, or a value obtained by taking a frequency spacing between any two of the M signals modulo a first subcarrier spacing is less than or equal to a second threshold, or equivalently, a maximum value obtained by taking the frequency spacing between any two of the M signals modulo the first subcarrier spacing is equal to the second threshold.

The first frequency spacing may be an integer multiple of the first subcarrier spacing, or expressed as *Kf.* K is a positive integer, and *f* represents the first subcarrier spacing. K represents a multiple relationship, and a value of K is related to a frequency spacing between two signals. Specifically, K is a multiple value that minimizes an absolute value of a difference between the first frequency spacing and the frequency spacing between the two signals. The first subcarrier spacing may be a minimum subcarrier spacing among subcarrier spacings configured/supported by the system, any one of the subcarrier spacings configured/supported by the system, or a subcarrier spacing of any size specified in a protocol. This is not limited in this application. For example, *f* is 15 kHz, 30 kHz, or 60 kHz. Alternatively, *f* is 5 kHz.

In another possible implementation, the first frequency spacing may be a frequency spacing between scheduled sending frequencies of two related signals, or a frequency spacing between frequencies at which two related signals should be sent. This is not limited in this application. The scheduled frequency spacing herein is consistent with a definition of the foregoing frequency spacing between the two signals.

The absolute value of the difference may alternatively be replaced with a spacing or a difference (difference). The frequency spacing between the two signals may be specifically a frequency spacing between center frequencies of start subcarriers (or center subcarriers, subcarriers with highest frequencies, subcarriers with lowest frequencies, or the like) of the two signals, a frequency spacing between a center frequency of any subcarrier of one of the two signals and a center frequency of any subcarrier of the other one of the two signals, or a frequency spacing of all combinations of a center frequency of any subcarrier of one of the two signals and a center frequency of any subcarrier of the other one of the two signals.

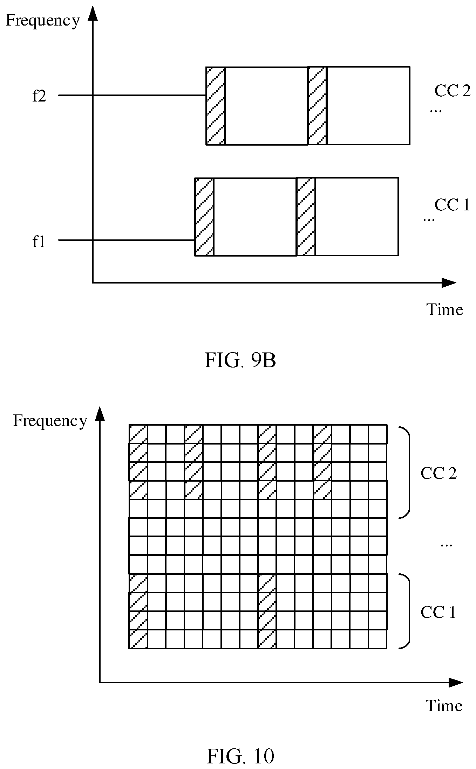

A center frequency of any subcarrier is used as an example. An absolute value of a difference between the first frequency spacing and the frequency spacing between the two signals may be represented as an absolute value of a difference between *Kf* and a frequency spacing between a center frequency of any subcarrier of a signal on a CC 1 and a center frequency of any subcarrier of a signal on a CC 2. K is a positive integer, and *f* represents the first subcarrier spacing. FIG. 9B is a diagram of a frequency-domain error condition in a case of two carriers according to this application. A width occupied by one grid in frequency is a bandwidth of the CC 1 or the CC 2, and dark parts indicate signals sent on the CC 1 and the CC 2, where f1 is a center frequency of one subcarrier of the signal on the CC 1, and f2 is a center frequency of one subcarrier of the signal on the CC 2. A frequency spacing between the two signals may be represented as f2-f1 or an absolute value of f1-f2. The foregoing frequency-domain error condition may be represented as that f2-f1-*Kf* is less than or equal to the second threshold or an absolute value of f2-f1-*Kf* is less than or equal to the second threshold. Alternatively, the frequency-domain error condition may alternatively be represented as that (f2-f1) mod *f* is less than or equal to the second threshold or (an absolute value of f2-f1) mod *f* is less than or equal to the second threshold. In a possible embodiment, all combinations of subcarriers of the signal on the CC 1 and subcarriers of the signal on the CC 2 need to meet the frequency-domain error condition. In another possible embodiment, it is only required that one subcarrier of the signal on the CC 1 and one subcarrier of the signal on the CC 2 meet the frequency-domain error condition.

In this embodiment of this application, a subcarrier of a signal sent on a carrier may be replaced with a subcarrier of the carrier. In other words, the foregoing possible implementation may be as follows: That the signal sent on the M carriers meets the frequency-domain error condition or that the M carriers meet the frequency-domain error condition may be that an absolute value of a difference between the first frequency spacing and a frequency spacing between subcarriers of any two of the M carriers is less than or equal to the second threshold, or equivalently, a maximum value of the absolute value of the difference between the first frequency spacing and the frequency spacing between the subcarriers of any two of the M carriers is equal to the second threshold, or a value obtained by taking a frequency spacing between subcarriers of any two of the M carriers modulo the first subcarrier spacing is less than or equal to the second threshold, or equivalently, a maximum value obtained by taking the frequency spacing between the subcarriers of any two of the M carriers modulo the first subcarrier spacing is equal to the second threshold.

The first frequency spacing may be an integer multiple of the first subcarrier spacing, or expressed as *Kf.* K is a positive integer, and *f* represents the first subcarrier spacing. K represents the multiple relationship, and the value of K is related to a frequency spacing between subcarriers of two carriers. Specifically, K is a multiple value that minimizes an absolute value of a difference between the first frequency spacing and the frequency spacing between the subcarriers of the two carriers. The first subcarrier spacing may be a minimum subcarrier spacing among subcarrier spacings configured/supported by the system, any one of the subcarrier spacings configured/supported by the system, or a subcarrier spacing of any size specified in a protocol. This is not limited in this application. For example, *f* is 15 kHz, 30 kHz, or 60 kHz. Alternatively, *f* is 5 kHz.

The absolute value of the difference may alternatively be replaced with a spacing or a difference (difference). The frequency spacing between the subcarriers of the two carriers may be specifically a frequency spacing between center frequencies of start subcarriers (or center subcarriers, subcarriers with highest frequencies, subcarriers with lowest frequencies, or the like) of the two carriers, a frequency spacing between a center frequency of any subcarrier of one of the two carriers and a center frequency of any subcarrier of the other one of the two carriers, or a frequency spacing of all combinations of a center frequency of any subcarrier of one of the two carriers and a center frequency of any subcarrier of the other one of the two carriers.

It should be understood that a frequency other than the center frequency of the subcarrier may alternatively be used as a reference frequency representing a subcarrier frequency. This is not limited in this application.

Further, the foregoing second threshold may be a frequency-domain error value on the order of hundreds of hertz.

In an example, the second threshold is 100 Hz. For example, frequency-domain errors of different carriers are denoted as Δ*f.* When the network device performs joint processing to obtain a speed spectrum, it may be considered that two peak values are detected at an actual speed of the target and at a position offset from the target by $\frac{Δ fλ}{2}$. *λ* is a signal wavelength. For example, the signal wavelength is a speed of light divided by a carrier frequency. If the two peak points can be identified separately, that is, the two peak points are greater than a speed resolution of the system, a false alarm in detection is caused. In conclusion, for a setting of a frequency-domain error threshold, reference may be made to that of the speed resolution of the system, to avoid the false alarm in detection, so that $\frac{Δ fλ}{2} \leq \frac{λ}{2 CPI} , that is , Δ f \leq \frac{1}{CPI}$

The speed resolution is represented as $\frac{λ}{2 CPI}$, where CPI is a coherent processing time. The coherent processing time is a time period during which sensing signals on which joint processing is performed are located. Generally, the coherent processing time is a time period that is much longer than a sending period of the sensing signals. In other words, within the coherent processing time, a transmit end may send a plurality of sensing signals in a same beam direction, and a receive end receives echo signals of the sensing signals, and performs joint processing on echo signals of the sensing signals within the coherent processing time, to implement ranging and speed measurement on the target. It should be understood that the time period may have another name. This is not limited in this application.

According to the foregoing formula, when the coherent processing time is 10 ms, the frequency-domain error condition is 100 Hz. Alternatively, when the coherent processing time is 20 ms, the frequency-domain error condition is 50 Hz. Alternatively, when the coherent processing time is 50 ms, the frequency-domain error condition is 20 Hz. Alternatively, when the coherent processing time is 100 ms, the frequency-domain error condition is 10 Hz. It should be understood that different frequency-domain error thresholds may alternatively be determined according to another threshold determining criterion. The foregoing is merely an example. This is not limited in this application.

It should be understood that, to achieve better coherent detection effect, sensing signals sent on a plurality of carriers are desirably at a same moment. However, due to a limitation of hardware or another undesirable case, there may be a deviation in sending moments of sensing signals actually sent by the terminal device on different carriers. In this case, the detection effect of coherent detection can be ensured to a greatest extent by limiting a maximum value of the deviation. The foregoing first threshold is a value that needs to be met by the time-domain error condition, and may be a value defined in a protocol or a value configured by the network device through signaling. This is not limited in this application. The first threshold reflects a condition for the coherent detection or a requirement for joint processing. Similarly, subcarriers of the sensing signals sent on the plurality of carriers are desirably located on frequencies with a same frequency spacing. The detection effect of the coherent detection can be ensured to a greatest extent by limiting a maximum value of a deviation in an undesirable case. The foregoing second threshold is a value that needs to be met by the frequency-domain error condition, and may be a value defined in a protocol or a value configured by the network device through signaling. This is not limited in this application. The second threshold reflects a condition for the coherent detection or a requirement for joint processing. Therefore, the time-domain error condition and/or the frequency-domain error condition meet/meets the requirement for the joint processing or the condition for the coherent detection.

FIG. 10 is a diagram of desirable signal sending in a case of two carriers according to this application. In FIG. 10, one grid occupies one symbol in time domain, and occupies one subcarrier spacing in frequency domain. A center point of the grid in frequency domain is a center frequency of a corresponding subcarrier. In FIG. 10, in a desirable case, signals sent on a same time-domain symbol are sent at a same moment. In frequency domain, each subcarrier occupied by the signal sent on the CC 1 and each subcarrier occupied by the signal sent on the CC 2 are located on frequencies corresponding to frequency-domain combs with a same frequency spacing. In this way, a good coherent detection effect can be obtained.

It should be understood that two carriers are used as an example in FIG. 8A to FIG. 9B. If M is greater than 2, for example, when M is 3, that the M carriers meet the time-domain error condition and/or the frequency-domain error condition may be understood as that, among three carriers, the CC 1 and the CC 2, the CC 1 and a CC 3, and the CC 2 and the CC 3 all meet the time-domain error condition and/or the frequency-domain error condition. Other cases are the same. Details are not described again.

In the foregoing description, it is mentioned that the first information indicates the M carriers. In an implementation, the first information may include N pieces of sub-information, the N pieces of sub-information respectively correspond to N carriers, N is an integer greater than or equal to M, and the M carriers are a part or all of the N carriers. M pieces of sub-information that are in the N pieces of sub-information and that correspond to the M carriers indicate a first state, and N-M pieces of sub-information other than the M pieces of sub-information in the N pieces of sub-information indicate a second state. The first state indicates that a carrier corresponding to the sub-information is a carrier in the M carriers, the second state indicates that a carrier corresponding to the sub-information is not a carrier in the M carriers, and the M carriers meet the time-domain error condition and/or the frequency-domain error condition.

A value of N is related to a quantity of carriers currently supported by the terminal device, for example, a quantity of carriers in a carrier capability reported by the terminal device, a quantity of carriers configured by the network device, or a quantity of carriers on which signals are configured or scheduled for transmission on a carrier. This is not limited in this application.

For example, the first information includes N bits, and the N bits respectively correspond to N carriers. One value of each bit may indicate that the carrier meets the time-domain error condition and/or the frequency-domain error condition, and another value of each bit may indicate that the carrier does not meet the time-domain error condition and/or the frequency-domain error condition. For example, N=3. In this case, the first information occupies 3 bits, where a 1^{st} bit corresponds to the CC 1, a 2^{nd} bit corresponds to the CC 2, and a 3^{rd} bit corresponds to the CC 3. As shown in Table 1, if a value of the first information is 111, carriers CC 1 to CC 3 meet the time-domain error condition and/or the frequency-domain error condition; if a value of the first information is 110, carriers CC 1 and CC 2 meet the time-domain error condition and/or the frequency-domain error condition; if a value of the first information is 101, carriers CC 1 and CC 3 meet the time-domain error condition and/or the frequency-domain error condition; if a value of the first information is 011, carriers CC 2 and CC 3 meet the time-domain error condition and/or the frequency-domain error condition; or the like. It should be understood that each piece of data in Table 1 is merely used as an example, and does not limit a specific form of the first information.

**Table 1**

| Value | Whether a CC 1 to a CC 3 meet a time-domain error condition and/or a frequency-domain error condition |
|---|---|
| 000 | None of the CC 1 to the CC 3 meet the time-domain error condition and/or the frequency-domain error condition |
| 001 | The CC 1 and the CC 2 do not meet the time-domain error condition and/or the frequency-domain error condition, but the CC 3 meets the time-domain error condition and/or the frequency-domain error condition |
| 010 | The CC 1 and the CC 3 do not meet the time-domain error condition and/or the frequency-domain error condition, but the CC 2 meets the time-domain error condition and/or the frequency-domain error condition |
| 100 | The CC 3 and the CC 2 do not meet the time-domain error condition and/or the frequency-domain error condition, but the CC 1 meets the time-domain error condition and/or the frequency-domain error condition |
| 011 | The CC 2 and the CC 3 meet the time-domain error condition and/or the frequency-domain error condition, but the CC 1 does not meet the time-domain error condition and/or the frequency-domain error condition |
| 101 | The CC 1 and the CC 3 meet the time-domain error condition and/or the frequency-domain error condition, but the CC 2 does not meet the time-domain error condition and/or the frequency-domain error condition |
| 110 | The CC 2 and the CC 1 meet the time-domain error condition and/or the frequency-domain error condition, but the CC 3 does not meet the time-domain error condition and/or the frequency-domain error condition |
| 111 | The CC 1 to the CC 3 all meet the time-domain error condition and/or the frequency-domain error condition |

Manner 2: The first information indicates a time-domain error value and/or a frequency-domain error value. Signals sent on M carriers meet the time-domain error value and/or the frequency-domain error value, or equivalently, the M carriers meet the time-domain error value and/or the frequency-domain error value. M is an integer greater than or equal to 2.

The time-domain error value and/or the frequency-domain error value that are/is indicated by the first information are/is supported by the terminal device, and signals sent by the terminal device on the M carriers meet the time-domain error value and/or the frequency-domain error value.

In Manner 2, the first information does not indicate, based on an obtained requirement for coherent detection, whether a time-domain error condition and/or a frequency-domain error condition are/is met, but indicates a time-domain error value and/or a frequency-domain error value that can be met by the terminal device. Based on this indication, the network device may determine whether the terminal device meets the requirement for the coherent detection requirement, to select a proper sensing signal processing algorithm, thereby improving sensing performance. There may be a plurality of implementations for determining and selection by the network device. This is not limited in this application.

For a definition of the time-domain error value, refer to the foregoing first threshold. For a definition of the frequency-domain error value, refer to the foregoing second threshold. The terminal device uses a value of the first threshold and/or a value of the second threshold that can be reached by the terminal device as the time-domain error value and/or the frequency-domain error value, and reports the time-domain error value and/or the frequency-domain error value based on the first information. In Manner 2, meeting the time-domain error value and/or the frequency-domain error value may be understood as meeting a time-domain error condition present when the first threshold takes the time-domain error value and/or meeting a frequency-domain error condition present when the second threshold takes the frequency-domain error value.

As mentioned above, the first information indicates the time-domain error value and/or the frequency-domain error value. In an implementation, the first information includes the time-domain error value and/or the frequency-domain error value. Further, the first information further includes indication information indicating the M carriers. For the indication information indicating the M carriers, refer to the indication manner in Manner 1. Details are not described again.

Manner 3: The first information indicates whether signals sent on M carriers meet a time-domain error condition and/or a frequency-domain error condition, or equivalently, the first information indicates whether the M carriers meet the time-domain error condition and/or the frequency-domain error condition. M is an integer greater than or equal to 2.

The first information indicates whether signals sent by the terminal device on the M carriers meet the time-domain error condition and/or the frequency-domain error condition.

For descriptions of the time-domain error condition and/or the frequency-domain error condition, refer to Manner 1. Details are not described again.

In an implementation, the first information may indicate a third state or a fourth state. The third state indicates that the signals sent on the M carriers meet the time-domain error condition and/or the frequency-domain error condition, and the fourth state indicates that the signals sent on the M carriers do not meet the time-domain error condition and/or the frequency-domain error condition. For example, the first information is 1 bit. When the bit takes a value of 1, the first information is in the third state. When the bit takes a value of 2, the first information is in the fourth state. Further, the first information further includes indication information indicating the M carriers. For the indication information indicating the M carriers, refer to the indication manner in Manner 1. Details are not described again. For another example, the first information includes N pieces of sub-information, for example, in the indication manner shown in Table 1. When all of the N pieces of sub-information indicate a second state, the first information is in the fourth state. When at least one piece of the N pieces of sub-information indicates a first state, the first information is in the third state.

S102: The terminal device sends a signal, and correspondingly, the network device receives the signal or an echo signal of the signal. The signal is used for sensing.

It should be understood that the signal sent by the terminal device is an actually sent signal. The signal or the echo signal of the signal received by the network device is a signal or an echo signal actually received by the network device. The signal may be signals respectively sent on the M carriers, or may be signals respectively sent on a part of carriers among the M carriers. The signal may further include a signal sent on a carrier other than the M carriers. This is not limited in this application.

Optionally, in the signal, signals sent on a part or all of the M carriers meet the time-domain error condition and/or the frequency-domain error condition, or meet the time-domain error value and/or the frequency-domain error value.

Optionally, the network device performs sensing based on the received signal or the echo signal of the signal.

Optionally, the signal is a sensing signal, a sounding reference signal, a demodulation reference signal, or a physical uplink shared channel (physical uplink shared channel, PUSCH).

Optionally, at least two of the foregoing signals use different radio access technologies respectively. The different radio access technologies include a long term evolution (long term evolution, LTE) technology, a 5G new radio (New Radio, NR) technology, a 6th generation (6th-generation, 6G) radio access technology, or a future evolved radio access technology. This is not limited in this application.

Optionally, network devices that receive the signal or the echo signal of the signal are a same network device.

According to the foregoing method, the terminal device may perform reporting based on the first information, so that the network device can select a proper signal processing algorithm based on the first information, thereby improving the sensing performance. For example, when the first information indicates the M carriers, the network device may perform joint processing on sensing signals sent on the M carriers. For another example, when the first information indicates the time-domain error value and/or the frequency-domain error value, the network device may determine, based on whether the time-domain error value and/or the frequency-domain error value meet a requirement for joint processing, whether to perform joint processing on sensing signals sent on the M carriers.

In embodiments provided in this application, the methods provided in embodiments of this application are separately described from a perspective of interaction between the terminal device and the network device. The method applied to the terminal device may include only the foregoing steps performed by the terminal device, and the steps performed by the terminal device may be implemented by different functional entities forming the terminal device. The method applied to the network device may include only the foregoing steps performed by the network device, and the steps performed by the network device may be implemented by different functional entities forming the network device. The network device or the terminal device may include a hardware structure and/or a software module, and implement the foregoing functions in a form of hardware structure, software module, or combination of the hardware structure and the software module. Whether a specific function in the foregoing functions is performed by using the hardware structure, the software module, or the combination of the hardware structure and the software module depends on particular applications and design constraints of the technical solutions.

The following describes communication apparatuses for implementing the foregoing methods in embodiments of this application with reference to the accompanying drawings. Therefore, all the foregoing content may be used in the following embodiments. Repeated content is not described again.

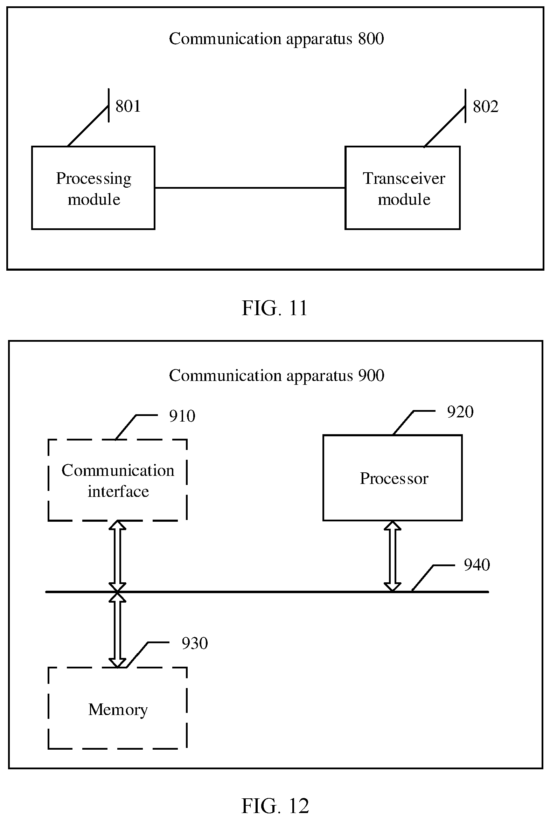

FIG. 11 is a diagram of an example of a structure of a communication apparatus 800. The communication apparatus 800 may implement functions or steps implemented by the terminal device or the network device in the foregoing method embodiments.

For example, the communication apparatus 800 may be a network device or a component (for example, a DU) in a network device, or a terminal device or a component in a terminal device.

In an implementation, the communication apparatus 800 may include a processing module 801 and a transceiver module 802. The processing module 801 may be configured to perform data processing, for example, perform the foregoing method embodiments. The processing module 801 may also be referred to as a processing unit or the like. The transceiver module 802 may be configured to implement a corresponding communication function, for example, perform receiving-related or sending-related steps, information, or messages in the foregoing method embodiments. The transceiver module 802 may also be referred to as a communication interface, a communication module, a transceiver unit, or the like.

It should be noted that, the communication apparatus 800 may include the processing module 801, but does not include the transceiver module 802. Alternatively, the communication apparatus 800 may include the transceiver module 802, but does not include the processing module 801. This may be specifically determined based on whether the foregoing solution performed by the communication apparatus 800 includes a processing action and receiving and sending actions.

Optionally, the communication apparatus 800 may further include a storage module, which is not shown in FIG. 11. The storage module may be configured to store instructions and/or data, and the processing module 801 may read the instructions and/or the data in the storage module, so that the communication apparatus 800 implements the foregoing method embodiments.

Optionally, the transceiver module 802 may include a sending module and a receiving module. The sending module is configured to perform the sending operation in the foregoing method embodiments. The receiving module is configured to perform the receiving operation in the foregoing method embodiments.

It should be noted that, the communication apparatus 800 may include the sending module, but does not include the receiving module. Alternatively, the communication apparatus 800 may include the receiving module, but does not include the sending module. This may be specifically determined based on whether the foregoing solution performed by the communication apparatus 800 includes a sending action and a receiving action.

Optionally, the communication apparatus 800 is a chip system, the transceiver unit may be an input/output interface of a chip (for example, a baseband chip), and the processing unit may be a processor of the chip system.

In a first implementation, the communication apparatus 800 may be a network device, a chip used in a network device, or another combined component or part that has a function of the foregoing network device.

In an example, the communication apparatus 800 is the network device or a component in the network device, and the communication apparatus 800 may perform the following content: The transceiver module 802 may be configured to receive first information, and the transceiver module 802 may be further configured to receive a signal or an echo signal of the signal, where the signal is used for sensing.

Optionally, the processing module 801 may be configured to perform sensing based on the signal or the echo signal of the signal.

In a second implementation, the communication apparatus 800 may be a terminal device, a chip used in a terminal device, or another combined component or part that has a function of the foregoing terminal device.

In an example, the communication apparatus 800 is the terminal device or a component in the terminal device, and the communication apparatus 800 may perform the following content: The transceiver module 802 may be configured to send first information, and the transceiver module 802 may be further configured to send a signal, where the signal is used for sensing.

It should be understood that, for more detailed descriptions of a corresponding process performed by each module, reference may be directly made to related descriptions in the method embodiments shown in FIG. 7. For brevity, details are not described herein again.

In the foregoing embodiment, the processing module 801 may be implemented by at least one processor or a processor-related circuit, the transceiver module 802 may be implemented by a transceiver or a transceiver-related circuit, and the storage module may be implemented by at least one memory.

FIG. 12 is a diagram of a structure of a communication apparatus 900 according to an embodiment of this application. The communication apparatus 900 may include a processor 920, configured to implement or support the communication apparatus 900 in implementing a function of the terminal device or the network device in any one of the method embodiments of this application. For details, refer to the detailed descriptions in the foregoing method embodiments. Details are not described herein again. For example, the processor 920 is configured to: read program instructions through a communication interface, and execute the program instructions, so that the communication apparatus 900 implements a corresponding method. The processor 920 may include one or more processors. This is not limited.

It should be noted that the foregoing functional module may be implemented by hardware, or may be implemented by a combination of hardware and software. This is not limited. When the communication apparatus 900 includes only the processor 920, the communication apparatus 900 may be a chip or a chip system.

For example, the communication apparatus 900 may be the chip system. The chip system may include a chip, or may include a chip and another discrete component. This is not limited.

Optionally, the communication apparatus 900 may further include a memory 930, configured to store program instructions and/or data. The memory 930 is coupled to the processor 920. Coupling may be understood as indirect coupling or a communication connection between apparatuses, units, or modules, may be in an electrical form, a mechanical form, or another form, and is used for information exchange between the apparatuses, the units, or the modules. The processor 920 and the memory 930 may operate cooperatively. The processor 920 and the memory 930 may be integrated together, or may be disposed separately.

Further, the processor 920 is configured to execute the program instructions stored in the memory 930, so that the communication apparatus 900 implements a corresponding method.

One or more memories in the memory 930 may be included in the processor. Alternatively, the memory 930 may exist independently. For example, an off-chip memory is connected to the processor 920 through a communication bus (represented by a bold line 940 in FIG. 12). Alternatively, the memory 930 and the processor 920 may be integrated together.

Optionally, the communication apparatus 900 further includes a communication interface 910 (represented by a dashed line in FIG. 12), configured to communicate with another device through a transmission medium, so that an apparatus in the communication apparatus 900 may communicate with the another device. For example, when the communication apparatus is a first communication apparatus, the another device may be a second communication apparatus or the like. The processor 920 may receive and send data through the communication interface 910. For example, the processor 920 may be configured to control the communication interface 910 to receive and/or send a signal.

The communication interface 910 may be specifically a transceiver. In hardware implementation, the transceiver may be configured to implement a function of the transceiver module 802, and the transceiver is integrated into the communication apparatus 900 to form the communication interface 910.

It should be noted that the communication interface 910 may have a sending function and a receiving function, and may implement signal receiving and sending; may have a sending function, but does not have a receiving function, and is configured to implement signal sending; or may have a receiving function, but does not have a sending function, and is configured to implement signal receiving.

It should be noted that a specific connection medium between the communication interface 910, the processor 920, and the memory 930 is not limited in embodiments of this application. In FIG. 12, the memory 930, the processor 920, and the communication interface 910 are connected through the communication bus 940. A manner of connection between other components is merely an example for description, and is not limited thereto. The communication bus 940 may be classified into an address bus, a data bus, a control bus, and the like. For ease of representation, only one bold line is used in FIG. 12. However, this does not indicate that there is only one communication bus or one type of communication bus.

In this embodiment of this application, the processor 920 may be a general-purpose processor, a digital signal processor, an application-specific integrated circuit, a field programmable gate array or another programmable logic device, a discrete gate or transistor logic device, or a discrete hardware component. The general-purpose processor may be a microprocessor or any conventional processor or the like. The method disclosed with reference to embodiments of this application may be performed and completed by hardware in the processor, or may be performed and completed by a combination of hardware and software in the processor.

In this embodiment of this application, the memory 930 may be a nonvolatile memory, for example, a hard disk drive (hard disk drive, HDD) or a solid-state drive (solid-state drive, SSD), or may be a volatile memory (volatile memory), for example, a random-access memory (random-access memory, RAM). Alternatively, the memory may be any other medium that is used to carry or store program code in a form of instructions or data structure and that can be accessed by a computer, or may be a circuit or any other apparatus that can implement a storage function, and is configured to store the program instructions and/or the data.

Specifically, the communication apparatus 900 may be a network device or a component (for example, a CU or a DU) in a network device, or a terminal device or a component in a terminal device.

In a first possible implementation, the communication apparatus 900 may be the DU in the network device, and is configured to implement a related method corresponding to the network device in the foregoing embodiments. For a specific function, refer to the descriptions in the foregoing embodiments.

For example, the related method corresponding to the network device in the foregoing embodiments includes: receiving first information; and receiving a signal or an echo signal of the signal, where the signal is used for sensing. Optionally, the related method further includes: performing sensing based on the signal or the echo signal of the signal.

The reception herein is, for example, reception from the RU.

In a second possible implementation, the communication apparatus 900 may be the CU in the network device, and is configured to implement a related method corresponding to the network device in the foregoing embodiments. For a specific function, refer to the descriptions in the foregoing embodiments.

For example, the related method corresponding to the network device in the foregoing embodiments includes: receiving first information; and receiving a signal or an echo signal of the signal, where the signal is used for sensing. Optionally, the related method further includes: performing sensing based on the signal or the echo signal of the signal.

The reception herein is, for example, reception from the DU.

In a third possible implementation, the communication apparatus 900 may be the terminal device, and is configured to implement a related method corresponding to the terminal device in the foregoing embodiments. For a specific function, refer to the descriptions in the foregoing embodiments.

For example, the related method corresponding to the terminal device in the foregoing embodiments includes: sending first information; and sending a signal, where the signal is used for sensing.

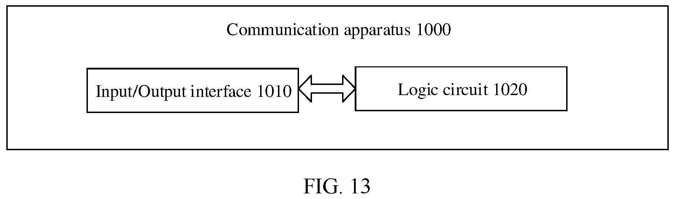

Based on a same concept, with reference to FIG. 13, an embodiment of this application further provides another communication apparatus 1000, including an input/output interface 1010 and a logic circuit 1020. The input/output interface 1010 is configured to: receive code instructions and transmit the code instructions to the logic circuit 1020. The logic circuit 1020 is configured to run the code instructions to perform the method performed by the first communication apparatus or the second communication apparatus in any one of the foregoing embodiments.

For example, the communication apparatus 1000 may be a network device or a component (for example, a DU) in a network device, or a terminal device or a component in a terminal device.

In a first implementation, the communication apparatus 1000 may be used in the network device to perform the method performed by the foregoing network device, specifically, for example, the method performed by the network device in the foregoing embodiment shown in FIG. 7. Therefore, for technical effects that can be achieved by this embodiment, refer to the foregoing method embodiments. Details are not described herein again.

In a second implementation, the communication apparatus 1000 may be used in the terminal device to perform the method performed by the foregoing terminal device, specifically, for example, the method performed by the terminal device in the foregoing embodiment shown in FIG. 7. Therefore, for technical effects that can be achieved by this embodiment, refer to the foregoing method embodiments. Details are not described herein again.

An embodiment of this application further provides a communication system. The communication system may include one or more of the following: a first communication apparatus or a second communication apparatus. For the first communication apparatus or the second communication apparatus, refer to the descriptions in the foregoing method embodiments. Details are not described again.

An embodiment of this application further provides a computer-readable storage medium, including program instructions. When the program instructions are run on a computer, the computer is enabled to perform the method or the steps of the terminal device or the network device in the foregoing embodiments.

An embodiment of this application further provides a computer program product, including program instructions. When the program instructions are run on a computer, the computer is enabled to perform the method or the steps of the terminal device or the network device in the foregoing embodiments.

An embodiment of this application provides a chip system. The chip system includes a processor, configured to implement a function (for example, perform a corresponding method or step) of the terminal device or the network device in the foregoing method. The chip system may include a chip, or may include a chip and another discrete component.

Optionally, the chip system further includes a memory. The memory is configured to store program instructions, so that the processor reads and executes the program instructions to implement a corresponding method.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, a part that essentially contributes to the technical solutions of this application or a part of the technical solutions may be implemented in a form of software product. The computer software product is stored in a storage medium, and includes several instructions for instructing a computer device (which may be a personal computer, a server, a network device, or the like) to perform all or a part of steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method comprises:
sending first information, wherein the first information indicates M carriers, signals sent on the M carriers meet a time-domain error condition and/or a frequency-domain error condition, and M is an integer greater than or equal to 2; and
sending the signals, wherein the signals are used for sensing.

2. The method according to claim 1, wherein the time-domain error condition is:
a time interval between any two of M signals is less than or equal to a first threshold; or
a time interval between a time domain position of each of M signals and a predefined time domain position is less than or equal to a first threshold, wherein
the M signals are M signals respectively sent on the M carriers.

3. The method according to claim 2, wherein
the first threshold is less than 65 nanoseconds.

4. The method according to any one of claims 1 to 3, wherein the frequency-domain error condition is:
an absolute value of a difference between a first frequency spacing and a frequency spacing between center frequencies of any two of the M carriers is less than or equal to a second threshold; or
a value obtained by taking a frequency spacing between center frequencies of any two of the M carriers modulo a first subcarrier spacing is less than or equal to a second threshold, wherein
the first frequency spacing is an integer multiple of the first subcarrier spacing, and the first subcarrier spacing is a subcarrier spacing of any size.

5. The method according to claim 4, wherein
the second threshold is 100 hertz.

6. The method according to any one of claims 1 to 5, wherein
the time-domain error condition and/or the frequency-domain error condition meet/meets a condition for coherent detection.

7. The method according to any one of claims 1 to 6, comprising:
the first information comprises N pieces of sub-information, the N pieces of sub-information respectively correspond to N carriers, N is an integer greater than or equal to M, and the M carriers are a part or all of the N carriers; and
M pieces of sub-information that are in the N pieces of sub-information and that correspond to the M carriers indicate a first state, and N-M pieces of sub-information other than the M pieces of sub-information in the N pieces of sub-information indicate a second state.

8. The method according to any one of claims 1 to 7, wherein
the M carriers indicated by the first information are supported by a terminal device, and signals sent by the terminal device on the M carriers meet the time-domain error condition and/or the frequency-domain error condition.

9. The method according to any one of claims 1 to 8, wherein the signal is a sensing signal, a sounding reference signal, a demodulation reference signal, or a physical uplink shared channel PUSCH.

10. The method according to any one of claims 1 to 9, wherein at least two of the signals use different radio access technologies respectively.

11. The method according to any one of claims 1 to 10, wherein the first information is carried in radio resource control RRC signaling, carried in uplink control information UCI, or carried in a medium access control control element MAC CE.

12. A communication method, wherein the method comprises:
receiving first information, wherein the first information indicates M carriers, signals sent on the M carriers meet a time-domain error condition and/or a frequency-domain error condition, and M is an integer greater than or equal to 2; and
receiving the signals, wherein the signals are used for sensing.

13. The method according to claim 12, wherein the method further comprises:
performing sensing based on the signals.

14. The method according to claim 12 or 13, wherein the time-domain error condition is:
a time interval between any two of M signals is less than or equal to a first threshold; or
a time interval between a time domain position of each of M signals and a predefined time domain position is less than or equal to a first threshold, wherein
the M signals are M signals respectively sent on the M carriers.

15. The method according to claim 14, wherein
the first threshold is less than 65 nanoseconds.

16. The method according to any one of claims 12 to 15, wherein the frequency-domain error condition is:
an absolute value of a difference between a first frequency spacing and a frequency spacing between center frequencies of any two of the M carriers is less than or equal to a second threshold; or
a value obtained by taking a frequency spacing between center frequencies of any two of the M carriers modulo a first subcarrier spacing is less than or equal to a second threshold, wherein
the first frequency spacing is an integer multiple of the first subcarrier spacing, and the first subcarrier spacing is a subcarrier spacing of any size.

17. The method according to claim 16, wherein
the second threshold is 100 hertz.

18. The method according to any one of claims 12 to 17, wherein
the time-domain error condition and/or the frequency-domain error condition meet/meets a condition for coherent detection.

19. The method according to any one of claims 12 to 18, comprising:
the first information comprises N pieces of sub-information, the N pieces of sub-information respectively correspond to N carriers, N is an integer greater than or equal to M, and the M carriers are a part or all of the N carriers; and
M pieces of sub-information that are in the N pieces of sub-information and that correspond to the M carriers indicate a first state, and N-M pieces of sub-information other than the M pieces of sub-information in the N pieces of sub-information indicate a second state.

20. The method according to any one of claims 12 to 19, wherein
the M carriers indicated by the first information are supported by a terminal device, and signals sent by the terminal device on the M carriers meet the time-domain error condition and/or the frequency-domain error condition.

21. The method according to any one of claims 12 to 20, wherein the signal is a sensing signal, a sounding reference signal, a demodulation reference signal, or a physical uplink shared channel PUSCH.

22. The method according to any one of claims 12 to 21, wherein at least two of the signals use different radio access technologies respectively.

23. The method according to any one of claims 12 to 22, wherein the first information is carried in radio resource control RRC signaling, carried in uplink control information UCI, or carried in a medium access control control element MAC CE.

24. A communication apparatus, comprising a module for performing the method according to any one of claims 1 to 11.

25. A communication apparatus, comprising a module for performing the method according to any one of claims 12 to 23.

26. A communication apparatus, comprising at least one processor, wherein the at least one processor is configured to perform the method according to any one of claims 1 to 11, or the at least one processor is configured to perform the method according to any one of claims 12 to 23.

27. A communication system, comprising a first communication apparatus and/or a second communication apparatus, wherein the first communication apparatus is configured to perform the method according to any one of claims 1 to 11, and the second communication apparatus is configured to perform the method according to any one of claims 12 to 23.

28. A computer-readable storage medium, storing a computer program or instructions, wherein the computer program or the instructions are used to implement the method according to any one of claims 1 to 11, or the computer program or the instructions are used to implement the method according to any one of claims 12 to 23.

29. A computer program product, wherein the computer program product comprises a computer program, and when the computer program is run on a computer, the computer is enabled to perform the method according to any one of claims 1 to 11, or the computer is enabled to perform the method according to any one of claims 12 to 23.
